# EUROPÄISCHE PATENTSCHRIFT

(11) **EP 3 516 194 B1**
(45) Veröffentlichungstag und Bekanntmachung des Hinweises auf die Patenterteilung: **14.10.2020**
(21) Anmeldenummer: 17739474.9
(22) Anmeldetag: 13.07.2017
(51) Int. Cl.: F02D 41/00, F02B 37/16, F02B 37/18, F02D 41/18

(54) **REGELVERFAHREN FÜR EINE AUFGELADENE BRENNKRAFTMASCHINE**
REGULATING METHOD FOR A CHARGED INTERNAL COMBUSTION ENGINE
PROCÉDÉ DE RÉGULATION D'UN MOTEUR À COMBUSTION INTERNE SURALIMENTÉ

(30) Priorität: 19.09.2016 DE 102016011305
(43) Veröffentlichungstag der Anmeldung: 31.07.2019
(73) Patentinhaber: MTU Friedrichshafen GmbH, 88045 Friedrichshafen (DE)
(72) Erfinder: FLOHR, Andreas, 88693 Deggenhausertal (DE); KIBELE, Christof, 88276 Berg (DE)
(74) Vertreter: Eisenführ Speiser
(86) Internationale Anmeldenummer: PCT/EP2017/000840
(87) Internationale Veröffentlichungsnummer: WO 2018/050265

(56) Entgegenhaltungen:
- EP-A2- 0 685 638
- DE-A1-102005 010 792
- FR-A1- 2 864 579
- US-A1- 2014 316 675

## Beschreibung

Die Erfindung betrifft ein Regelverfahren gemäß dem Oberbegriff des Anspruchs 1 für eine aufgeladene Brennkraftmaschine, bei dem über die Verstellung eines Verdichter-Bypassventils und eines Turbinen-Bypassventils ein Betriebspunkt im Verdichterkennfeld festgelegt wird.

Aus der DE 10 2014 215 180 A1 ist ein Verfahren für eine einstufig aufgeladene Brennkraftmaschine mit einem Verdichter-Bypassventil und einem Turbinen-Bypassventil bekannt. Dem Verfahren zugrunde gelegt ist ein typisches Verdichterkennfeld, welches eine Zuordnung von Luftmassenstrom zu Ladedruck abbildet. Innerhalb des Verdichterkennfelds sind ein nicht zulässiger Arbeitsbereich starken Verdichterpumpens und ein Bereich schwachen Verdichterpumpens dargestellt. Das Verfahren besteht nun darin, dass nach einer Drosselklappen-Freigabe die Lage des Betriebspunkts im Verdichterkennfeld ermittelt wird und in Abhängigkeit hiervon das Verdichter- und das Turbinen-Bypassventil angesteuert werden. Wird beispielsweise festgestellt, dass der Betriebspunkt im Bereich des schwachen Pumpens liegt, so wird das Verdichter-Bypassventil weiter geöffnet und ergänzend das Turbinen-Bypassventil weniger geöffnet. Das Verfahren löst zwar das Problem des Verdichterpumpens nach einer Fahrpedal-Freigabe, ist jedoch zum Beispiel hinsichtlich des Wirkungsgrads noch verbesserungswürdig.

EP 0 685 638 A2 beschreibt grundsätzlich ein eingangs genanntes Regelverfahren für eine aufgeladene Brennkraftmaschine, bei dem jedenfalls im Prinzip über einen Verdichter-Lageregler ein Betriebspunkt des Verdichters in einem Verdichterkennfeld eingestellt wird, indem über den Verdichter-Lageregler sowohl eine erste Stellgröße zur Ansteuerung des Verdichter-Bypassventils als auch eine zweite Stellgröße zur Ansteuerung des Turbinen-Bypassventils berechnet werden. In dem Verfahren der EP 0 685 638 A2 wird das Verdichter-Bypassventil (Bypass-Valve) und das Turbinen-Bypassventil (Wastegate) gleichzeitig angesteuert, wobei der Betriebspunkt in dem Verdichterkennfeld damit eingestellt wird, dass simultan eine Winkelposition des Verdichter-Bypassventils und des Turbinen-Bypassventils so angepasst wird, dass der Turbolader in dem nierenförmigen Gebiet sogenannter Effizienz-Inseln der Fig. 3 der EP 0 685 638 A2 betrieben wird. EP 0 685 638 A2 beschreibt, dass sich der Betriebspunkt innerhalb des Kompressorkennfeldes in Bezug auf die Effizienz-Inseln nach rechts verschiebt, indem das Verdichter-Bypassventil geöffnet wird, um einem Mismatch zwischen Verdichterrad und Turbinenrad im Rahmen von Toleranzen zu begegnen und gleichzeitig einen Betrieb innerhalb der Effizienz-Inseln zu erhalten. Es wird lediglich speziell dazu erläutert, dass unter bestimmten Bedingungen ein Druckverlust im Verdichter auszugleichen sein könnte durch Verringern des Winkels des Turbinen-Bypassventils (Wastegate).

DE 10 2005 010792 A1 beschreibt lediglich allgemein eine Steuerung von Ventilen der vorgenannten Art. US 2014/316675 A1 beschreibt eine ähnliche Konfiguration mit Verdichter-Bypass und Turbinen-Bypassventil (Wastegate), sowie zwar eine Messung der Luftmasse; die Luftmassenmessung wird aber lediglich zur Bestimmung eines Betriebszustandes verwendet, in welchem Verdichterpumpen möglich sind. FR 2 864 579 A1 offenbart lediglich allgemein einen PID-Regler für Bypass-Ventile der vorgenannten Art.

Der Erfindung liegt daher die Aufgabe zugrunde, ein Regelverfahren für eine einstufige aufgeladene Brennkraftmaschine mit einem Verdichter- und einem Turbinen-Bypassventil bei optimiertem Wirkungsgrad zu entwerfen.

Gelöst wird diese Aufgabe durch eine Regelverfahren mit den Merkmalen von Anspruch 1. Die Ausgestaltungen sind in den Unteransprüchen dargestellt.

Beim Regelverfahren gemäß der Erfindung wird in Abhängigkeit einer Drosselklappen-Regelabweichung über einen Verdichter-Lageregler ein Betriebspunkt des Verdichters in einem Verdichterkennfeld eingestellt, indem über den Verdichter-Lageregler sowohl eine erste Stellgröße zur Ansteuerung des Verdichter-Bypassventils als auch eine zweite Stellgröße zur Ansteuerung des Turbinen-Bypassventils berechnet werden. Ergänzend wird in Abhängigkeit einer Luftmassen-Regelabweichung über einen Korrekturregler der Betriebspunkt des Verdichters korrigiert, indem über den Korrekturregler sowohl eine erste Korrekturgröße zur Korrektur der ersten Stellgröße als auch eine zweite Korrekturgröße zur Korrektur der zweiten Stellgröße berechnet werden. Über den Korrekturregler wird der Betriebspunkt im Verdichterkennfeld auf eine Kennlinie optimaler Betriebspunkte geregelt. Konkret verläuft die Kennlinie der optimalen Betriebspunkte durch die Felder der bestmöglichen Wirkungsgrade.

Über die Kennlinie optimaler Betriebspunkte und die Pumpgrenze ist im Verdichterkennfeld ein erster Bereich definiert. Liegt nun zum Beispiel ein Betriebspunkt im ersten Bereich, so wird über den Korrekturregler die Öffnung des Verdichter-Bypassventils vergrößert und die Öffnung des Turbinen-Bypassventils verringert. Die vom Korrekturregler berechneten Korrekturgrößen wirken folglich gegenläufig auf die beiden Stellgrößen ein.

Die Erfindung gestattet ein einstufiges Aufladekonzept mit einem kleinen Abgasturbolader nebst kleiner Turbine. Da sich in nahezu allen Betriebspunkten ein Ladedrucküberschuss bis hinauf zu Volllastkurve ergibt, wird dieser zunächst über die Drosselklappe abgedrosselt. Aufgrund der hohen Druckverhältnisse am Verdichter ist eine reine Drosselklappen-Regelung nicht möglich, so dass der überschüssige Ladedruck über das Verdichter-Bypassventil und das Turbinen-Bypassventil abgesteuert wird. Erst dadurch kann ein Pumpen in unteren Drehzahlbereich und ein Stopfen des Verdichters im oberen Drehzahlbereich vermieden werden. Von Vorteil ist daher, dass mit einer einstufigen Aufladung ein breites Verdichterkennfeld darstellbar ist.

Aufgrund der Luftmassen-Regelung reagiert das Regelverfahren automatisch richtig auf Änderungen der Umgebungsbedingung, wie etwa die geodätische Höhe oder die Umgebungstemperatur. Hervorzuheben ist der geringe Bedatungsaufwand von nur einem Kennfeld. Indem der Verdichter-Lageregler sowohl auf das Verdichter-Bypassventil als auch auf das Turbinen-Bypassventil zugreift, ist ein stetiger Übergang gewährleistet. Zudem werden Transientvorgänge richtig interpretiert, so wird zum Beispiel bei einer Lastaufschaltung der fehlenden Drosselklappen-Reserve dadurch begegnet, dass das Verdichter-Bypassventil und das Turbinen-Bypassventil geschlossen werden. Einsetzbar ist das Verfahren sowohl bei einem Dieselmotor als auch einem Gasmotor.

In den Figuren ist ein bevorzugtes Ausführungsbeispiel dargestellt. Es zeigen:
- Figur 1: ein Systemschaubild,
- Figur 2: ein Blockschaltbild,
- Figur 3: ein Verdichterkennfeld und
- Figur 4: ein Zeitdiagramm.

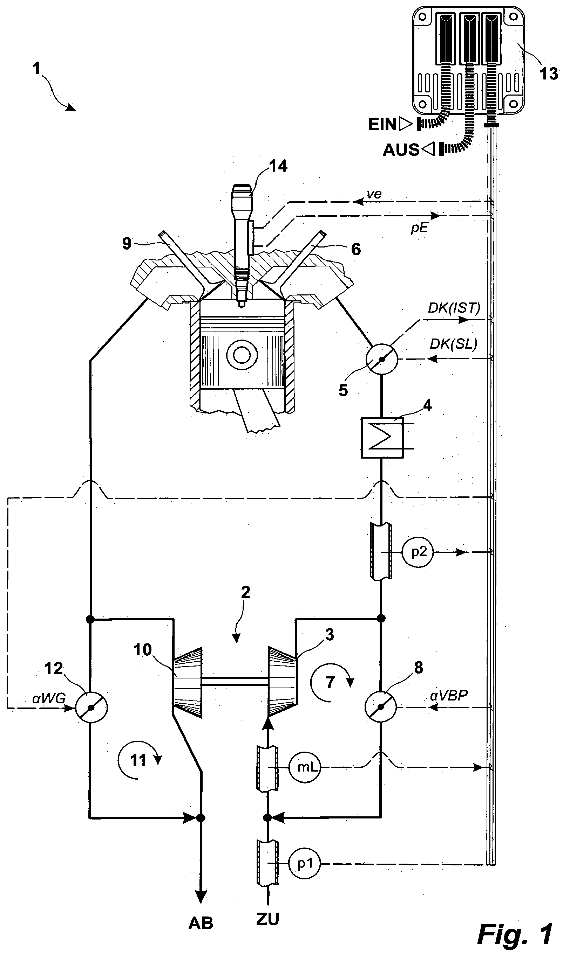

Die Figur 1 zeigt ein reduziertes Systemschaubild einer Brennkraftmaschine 1 mit einem Abgasturbolader 2. Der Abgasturbolader 2 umfasst einen Verdichter 3 und eine Turbine 10. Der weitere Aufbau und die Funktion des Abgasturboladers 2 werden als bekannt vorausgesetzt. Der Luftpfad zur Zuführung von Verbrennungsluft umfasst den Verdichter 3, einen Ladeluftkühler 4, eine Drosselklappe 5 und ein Einlassventil 6 im Zylinderkopf der Brennkraftmaschine 1. Ergänzt wird der Luftpfad durch einen Verdichter-Bypass 7 mit einem Verdichter-Bypassventil 8. Über den Verdichter-Bypass 7 wird die Ladeluft von der Sekundärseite des Verdichters 3 auf die Primärseite des Verdichters 3 zurückgeführt. Der Abgaspfad umfasst ein Auslassventil 9 im Zylinderkopf der Brennkraftmaschine 1 und die Turbine 10. Ergänzt wird der Abgaspfad durch einen Turbinen-Bypass 11 mit einem Turbinen-Bypassventil 12.

Gesteuert und geregelt wird die Brennkraftmaschine 1 über ein elektronisches Motorsteuergerät 13. Als Eingangssignale des elektronischen Motorsteuergeräts 13 sind dargestellt: ein Druckniveau p1 der Primärseite des Verdichters 3, eine Luftmasse mL auf der Sekundärseite des Verdichters 3, ein Druckniveau p2 der Ladeluft, ein Ist-Drosselklappenwert DK(IST) der Drosselklappe 5 und optional das Druckniveau pE des Kraftstoffes im Injektor 14. Mit dem Bezugszeichen EIN sind die weiteren Eingangssignale bezeichnet, beispielsweise eine Motordrehzahl. Als Ausgangssignale des elektronischen Motorsteuergeräts 13 sind in der Figur 1 dargestellt: ein erste Stellgröße αVBP zur Ansteuerung des Verdichter-Bypassventils 8, ein zweites Stellgröße aWG zur Ansteuerung des Turbinen-Bypassventils 12, ein Soll-Drosselklappenwert DK(SL) zur Ansteuerung der Drosselklappe 5 und ein Signal ve zur Ansteuerung des Injektors 14, beispielsweise ein Spritzbeginn oder Spritzende. Über die erste Stellgröße αVBP wird die Winkellage des Verdichter-Bypassventils 8 vorgegeben. Über die zweite Stellgröße aWG wird die Winkellage des Turbinen-Bypassventils 12 vorgegeben. Wird anstelle einer Klappe ein lineares Stellglied verwendet, dann entsprechen sowohl die erste Stellgröße αVBP als auch die zweite Stellgröße aWG einem Stellweg. Mit dem Bezugszeichen AUS sind die weiteren Augangssignale zur Steuerung und Regelung der Brennkraftmaschine 1 gekennzeichnet, beispielsweise das Stellsignal für eine Saugdrossel bei einem Common-Railsystem.

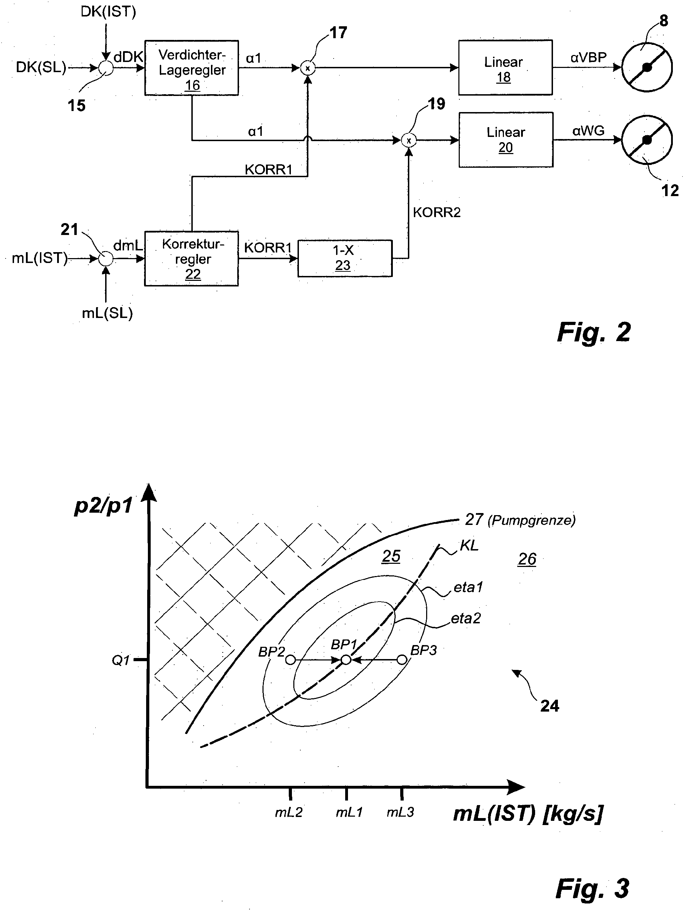

Die Figur 2 zeigt ein Blockschaltbild, wobei die einzelnen Blöcke Programmteile eines ausführbaren Programms darstellen. Die Eingangsgrößen sind der Soll-Drosselklappenwert DK(SL), der Ist-Drosselklappenwert DK(IST), die Soll-Luftmasse mL(SL) und die Ist-Luftmasse mL(IST). Bei einem Dieselmotor ohne Drosselklappensteuerung wird anstelle der Drosselklappenwerte dann der Soll- und Istwert des Druckniveaus der Ladeluft p2 verwendet. Die Ausgangsgrößen sind die erste Stellgröße αVBP zur Ansteuerung des Verdichter-Bypassventils 8 und die zweite Stellgröße aWG zur Ansteuerung des Turbinen-Bypassventils 12. An einem Summationspunkt 15 wird aus der Soll-Istabweichung der Drosselklappe die Drosselklappen-Regelabweichung dDK berechnet. Aus der Drosselklappen-Regelabweichung dDK berechnet ein Verdichter-Lageregler 16, typischerweise mit PID-Verhalten, einen ersten Winkelwert α1. An einem Multiplikationspunkt 17 wird der erste Winkelwert α1 mit einer ersten Korrekturgröße KORR1 multipliziert und anschließend über eine Funktionsblock 18 linearisiert. Der Ausgangswert entspricht dann der ersten Stellgröße αVBP, mit welcher das Verdichter-Bypassventil 8 angesteuert wird. Der Verdichter-Lageregler 16 besitzt einen zweiten Signalpfad für den ersten Winkelwert al. An einem Multiplikationspunkt 19 wird der erste Winkelwert α1 mit einer zweiten Korrekturgröße KORR2 multipliziert und anschließend über eine Funktionsblock 20 linearisiert. Der Ausgangswert entspricht der zweiten Stellgröße αWG, mit welcher das Turbinen-Bypassventil 12 angesteuert wird.

An einem Summationspunkt 21 wird aus der Soll-Istabweichung der Luftmasse eine Luftmassen-Regelabweichung dmL berechnet. Aus der Luftmassen-Regelabweichung berechnet dann ein Korrekturregler 22, typischerweise mit PID-Verhalten, die erste Korrekturgröße KORR1. Die erste Korrekturgröße KORR1 hat einen Wert zwischen Null und Eins. Die erste Korrekturgröße KORR1 wirkt multiplikativ auf die ersten Winkelwert α1 (Multiplikationspunkt 17) ein und bestimmt damit auch die erste Stellgröße αVBP. Aus der ersten Korrekturgröße KORR1 wird über ein Differenzglied 23 die Differenz zu Eins gebildet. Der Ausgangswert entspricht der zweiten Korrekturgröße KORR2, welche ebenfalls einen Wert zwischen Null und Eins annehmen kann. Die zweite Korrekturgröße KORR2 wirkt multiplikativ auf den ersten Winkelwert α1 ein und bestimmt damit die zweite Stellgröße αWG. Über das Differenzglied 23 wird bewirkt, dass die erste Stellgröße αVBP und die zweite Stellgröße αWG eine gegenläufige Wirkung erzielen. Mit anderen Worten: wird zum Beispiel der Verdichter-Bypassventil in Öffnungsrichtung beaufschlagt, so wird das Turbinen-Bypassventil in Schließrichtung betätigt.

In der Figur 3 ist ein Verdichterkennfeld 24 dargestellt. Auf der Abszisse ist die Ist-Luftmasse mL(IST) und auf der Ordinate ist das Verdichtungsverhältnis, also der Quotient aus dem Druckniveaus p2 auf der Sekundärseite des Verdichters und des Druckniveaus p1 auf der Primärseite des Verdichters aufgetragen. Schraffiert dargestellt ist der Pumpbereich, welcher durch die Pumpgrenze 27 begrenzt wird. Im zulässigen Bereich, also außerhalb des Pumpbereichs, sind Felder konstanten Wirkungsgrads eingezeichnet, Bezugszeichen etal und eta2. Durch diese Wirkungsgradfelder ist eine Kennlinie KL optimaler Betriebspunkte gelegt. So liegt beispielsweise der Betriebspunkt BP1 mit dem Wertepaar mL1/Q1 auf dieser Kennlinie KL. Durch die Pumpgrenze und die Kennlinie KL wird ein erster Bereich 25 definiert. Ein zweiter Bereich 26 befindet sich rechts der Kennlinie KL in Richtung größerer Ist-Luftmassenwerte. Der Betriebspunkt BP2 liegt im ersten Bereich 25 und ist über das Wertepaar mL2/Ql definiert. In diesem Fall wird über den Korrekturregler das Verdichter-Bypassventil in Öffnungsrichtung und das Turbinen-Bypassventil in Schließrichtung verändert. Als Folge davon verändert sich der Betriebspunkt BP2 in Richtung auf den Betriebspunkt BP1. Der Betriebspunkt BP3 liegt im zweiten Bereich 26 und ist durch das Wertepaar mL3/Ql definiert. In diesem Fall wird über den Korrekturregler das Verdichter-Bypassventil in Schließrichtung und das Turbinen-Bypassventil in Öffnungsrichtung verändert.

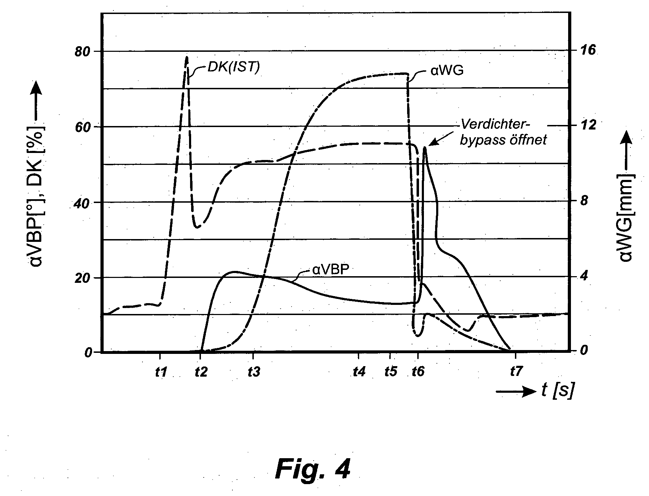

In der Figur 4 zeigt ein Zeitdiagramm. Auf der linken Ordinate sind die erste Stellgröße αVBP zur Ansteuerung des Verdichter-Bypassventils in Grad und der Drosselklappenwert in Prozent aufgetragen. Auf der rechten Ordinate ist die zweite Stellgröße αWG zur Ansteuerung des Turbinen-Bypassventils aufgetragen. Über der Zeit sind folgende Signale dargestellt: der Ist-Drosselklappenwert DK(IST) als gestrichelte Linie, die erste Stellgröße αVBP als durchgezogene Linie und die zweite Stellgröße αWG als strichpunktierte Linie. Im Zeitdiagramm sind drei unterschiedliche Betriebszustände dargestellt, nämlich eine Lastaufschaltung im Zeitraum t1-t3, ein eingeschwungener Zustand im Zeitraum t3-t5 und ein Lastabwurf im Zeitraum t5-t7. Zum Zeitpunkt t1 wird eine Lastaufschaltung initiiert. Die Drosselklappenregelung reagiert hierauf mit einem vollständigen Öffnen der Drosselklappe, Wert ca. 80%, gefolgt von einem Unterschwingen. Im Zeitraum t2 bis t3 wird dann die Drosselklappe auf den korrekten Sollwert eingeregelt. Zum Zeitpunkt t2 wird festgestellt, dass der Betriebspunkt im Verdichterkennfeld im ersten Bereich liegt (Fig. 3: BP2). Über den Korrekturregler wird daher das Verdichter-Bypassventil geöffnet, das heißt, der Korrekturregler korrigiert den Betriebspunkt so lange bis dieser auf der Kennlinie optimaler Betriebspunkte liegt. Der Verlauf des ersten Stellsignals αVBP spiegelt diesen Sachverhalt wieder. Beim dargestellten Beispiel wird nun davon ausgegangen, dass ab dem Zeitpunkt t3 der Betriebspunkt im zweiten Bereich des Verdichterkennfelds liegt. Hierauf reagiert der Korrekturregler indem nunmehr das Turbinen-Bypassventil über die zweite Stellgröße aWG in Öffnungsrichtung beaufschlagt wird und das Verdichter-Bypassventil über die erste Stellgröße αVBP in Schließrichtung betätigt wird. Zum Zeitpunkt t4 ist dann das System eingeschwungen.

Zum Zeitpunkt t5 wird eine Lastabschaltung ausgelöst. Daher wird zum Zeitpunkt t 6 die Drosselklappe vollständig geschlossen. Da nunmehr der Betriebspunkt im ersten Bereich des Verdichterkennfelds liegt, wird das Verdichter-Bypassventil vollständig geöffnet und das Turbinen-Bypassventil geschlossen. Im Diagramm ist dies entsprechend gekennzeichnet. Nach dem Zeitpunkt t7 ist das System wieder im eingeschwungenen Zustand.

### BEZUGSZEICHENLISTE

- 1: Brennkraftmaschine
- 2: Abgasturbolader
- 3: Verdichter
- 4: Ladeluftkühler
- 5: Drosselklappe
- 6: Einlassventil
- 7: Verdichter-Bypass
- 8: Verdichter-Bypassventil
- 9: Auslassventil
- 10: Turbine
- 11: Turbinen-Bypass
- 12: Turbinen-Bypassventil
- 13: Elektronisches Motorsteuergerät (ECU)
- 14: Injektor
- 15: Summationspunkt
- 16: Verdichter-Lageregler
- 17: Multiplikationspunkt
- 18: Funktionsblock
- 19: Multiplikationspunkt
- 20: Funktionsblock
- 21: Summationspunkt
- 22: Korrekturregler
- 23: Differenzglied
- 24: Verdichterkennfeld
- 25: Erster Bereich (Verdichterkennfeld)
- 26: Zweiter Bereich (Verdichterkennfeld)
- 27: Pumpgrenze

## Patentansprüche

1. Regelverfahren für eine aufgeladene Brennkraftmaschine (1), wobei in dem Regelverfahren in Abhängigkeit einer Drosselklappen-Regelabweichung (dDK) über einen Verdichter-Lageregler (16) ein Betriebspunkt des Verdichters (3) in einem Verdichterkennfeld (24) eingestellt wird, indem über den Verdichter-Lageregler (16) sowohl eine erste Stellgröße (αVBP) zur Ansteuerung des Verdichter-Bypassventils (8) als auch eine zweite Stellgröße (αWG) zur Ansteuerung des Turbinen-Bypassventils (12) berechnet werden **dadurch gekennzeichnet, dass**
in dem Regelverfahren in Abhängigkeit einer Luftmassen-Regelabweichung (dmL) über einen Korrekturregler (22) der Betriebspunkt des Verdichters (3) korrigiert wird, indem über den Korrekturregler (22) sowohl eine erste Korrekturgröße (KORR1) zur Korrektur der ersten Stellgröße (αVBP) als auch eine zweite Korrekturgröße (KORR2) zur Korrektur der zweiten Stellgröße (αWG) berechnet werden.

2. Verfahren nach Anspruch 1, **dadurch gekennzeichnet, dass** der Betriebspunkt im Verdichterkennfeld (24) über den Korrekturregler (22) auf eine Kennlinie (KL) optimaler Betriebspunkte geregelt wird.

3. Verfahren nach Anspruch 2, **dadurch gekennzeichnet, dass** ein erster Bereich (25) im Verdichterkennfeld (24) über die Kennlinie (KL) und eine Pumpgrenze (27) definiert wird und bei einem Betriebspunkt im ersten Bereich (25) über den Korrekturregler (22) die Öffnung des Verdichter-Bypassventils (8) vergrößert sowie die Öffnung des Turbinen-Bypassventils (12) verringert wird.

4. Verfahren nach Anspruch 3, **dadurch gekennzeichnet, dass** bei einem Betriebspunkt in einem zweiten Bereich (26) des Verdichterkennfelds (24) über den Korrekturregler (22) die Öffnung des Verdichter-Bypassventils (8) verringert und die Öffnung des Turbinen-Bypassventils (12) vergrößert wird.

## Claims

1. Regulating method for a charged internal combustion engine (1), wherein, in the regulating method, an operating point of the compressor (3) in a compressor map (24) is adjusted by a compressor position regulator (16) as a function of a throttle valve regulation deviation (dDK) in that both a first manipulated variable (αVBP) for actuating the compressor bypass valve (8) and a second manipulated variable (αWG) for actuating the turbine bypass valve (12) are calculated by the compressor position regulator (16),
**characterized in that**,
in the regulating method, the operating point of the compressor (3) is corrected by a correction regulator (22) as a function of an air mass regulation deviation (dmL) **in that** both a first correction variable (KORR1) for correcting the first manipulated variable (αVBP) and a second correction variable (KORR2) for correcting the second manipulated variable (αWG) are calculated by the correction regulator (22) .

2. Method according to claim 1, **characterized in that** the operating point in the compressor map (24) is regulated by the correction regulator (22) to a characteristic curve (KL) of optimal operating points.

3. Method according to claim 2, **characterized in that** a first area (25) in the compressor map (24) is defined by the characteristic curve (KL) and a surge limit (27), and at an operating point in the first area (25) the opening of the compressor bypass valve (8) is increased in size and the opening of the turbine bypass valve (12) is reduced in size by the correction regulator (22).

4. Method according to claim 3, **characterized in that** at an operating point in a second area (26) of the compressor map (24) the opening of the compressor bypass valve (8) is reduced in size and the opening of the turbine bypass valve (12) is increased in size by the correction regulator (22).

## Revendications

1. Procédé de régulation pour un moteur à combustion interne suralimenté (1), selon lequel en fonction d'un écart de réglage de clapet d'étranglement (dDK), un point de fonctionnement du compresseur est ajusté par l'intermédiaire d'un régulateur de position du compresseur (16) dans un diagramme caractéristique du compresseur (24), du fait que le régulateur de position du compresseur (16) permet de calculer aussi bien une première grandeur de réglage (αVBP) pour commander la soupape de dérivation du compresseur (8), qu'également une seconde grandeur de réglage (αWG) pour commander la soupape de dérivation des turbines (12), **caractérisé en ce que**
dans le procédé de régulation, en fonction d'un écart de contrôle de masse d'air (dm), le point de fonctionnement du compresseur (3) est corrigé grâce au fait que via le contrôleur de correction (22) à la fois une première grandeur de correction (KORR1) pour corriger la première grandeur de réglage (αVBP) et une seconde grandeur de correction (KORR2) pour corriger la deuxième grandeur de réglage (αWG) sont calculées.

2. Procédé selon la revendication 1, **caractérisé en ce que** le point de fonctionnement dans le diagramme caractéristique du compresseur (24) est réglé via le contrôleur de correction (22) sur une courbe caractéristique (KL) de points de fonctionnement optimaux.

3. Procédé selon la revendication 2, **caractérisé en ce qu'**une première zone (25) est définie dans le diagramme caractéristique du compresseur (24) via la courbe caractéristique (KL) et une limite de pompe (27) et au niveau d'un point de fonctionnement dans la première zone (25), via le contrôleur de correction (22) l'ouverture de la soupape de dérivation du compresseur (8) est agrandie et l'ouverture de la soupape de dérivation de turbine (12) est réduite.

4. Procédé selon la revendication 3, **caractérisé en ce qu'**en au niveau d'un point de fonctionnement dans une deuxième zone (26) du diagramme caractéristique du compresseur (24), via le contrôleur de correction (22) l'ouverture de la soupape de dérivation du compresseur (8) est réduite et l'ouverture de la soupape de dérivation de la turbine (12) est agrandie.
